Europäisches Patentamt

European Patent Office

Office européen des brevets

(11) Publication number: **0 117 352**
A1

# EUROPEAN PATENT APPLICATION

(21) Application number: 83307418.0

(51) Int. Cl.³: **B 23 K 26/00**, B 23 K 1/04

(22) Date of filing: 06.12.83

(30) Priority: 24.02.83 JP 28617/83
01.08.83 JP 139492/83

(43) Date of publication of application: 05.09.84
Bulletin 84/36

(84) Designated Contracting States: **DE FR GB IT NL**

(71) Applicant: **FUJITSU LIMITED, 1015, Kamikodanaka Nakahara-ku, Kawasaki-shi Kanagawa 211 (JP)**

(72) Inventor: **Iikawa, Tsutomu, 4-1-602, Shibokuhon-cho 5-chome Miyamae-ku, Kawasaki-shi Kanagawa 213 (JP)**
Inventor: **Sakai, Takeaki, 6, Tsukimino 4-chome, Yamato-shi Kanagwa 242 (JP)**
Inventor: **Kawamura, Isao, 1622, Sugeta-cho Kanagawa-ku, Yokohama-shi Kanagawa 221 (JP)**
Inventor: **Natori, Katsuhide, 3016-1, Nagatsuta-cho Midori-ku, Yokohama-shi Kanagawa 227 (JP)**
Inventor: **Nagai, Takeshi, 11-8 Kakinokidai Midori Ku, Yokohama-Shi Kanagawa 227 (JP)**

(74) Representative: **Rackham, Stephen Neil et al, GILL JENNINGS & EVERY 53-64 Chancery Lane, London WC2A 1HN (GB)**

(54) A process for welding aluminium-based elements and a welded assembly.

(57) An assembly of elements (1) and (2) made of aluminium or an aluminium-based alloy is produced by introducing between the elements (1) and (2) an intermediate metal (3, 4, 5, 6 and 7) and laser welding them together. An alloy layer including the intermediate metal is formed in a weld zone between the elements and this exhibits neither cracks nor voids and so produces an airtight seal.

EP 0 117 352 A1

ACTORUM AG

FUJITSU LIMITED                                    80/2194/02

- 1 -

A PROCESS FOR WELDING ALUMINIUM-BASED
ELEMENTS AND A WELDED ASSEMBLY

The present invention relates to an assembly of welded aluminium-based elements, particularly such an assembly forming a package for a microwave amplifier, and a process for making it.

It is well known that thermal deterioration of elements must be avoided when sealing a package for integrated circuit devices (IC's) and substrates. Although a stainless steel cover and casing have been used for producing such a package, steel is not only heavy, but also exhibits relatively low thermal conductivity.

The low thermal conductivity reduces the performance of the IC's mounted in the package because of its low heat dissipation and this is especially true where the package contains high output amplifiers.

Aluminium or an aluminium alloy is lighter, and exhibits desirable malleability properties and excellent thermal conductivity. Therefore, aluminium or an aluminium alloy is much more suitable for producing a package for IC's. However, where the aluminium or aluminium alloy elements must be bonded together to produce a package, this cannot be achieved by brazing. Brazing subjects the package as a whole to a high temperature and would destroy the IC's.

It has been proposed to bond the elements together by laser welding which provides a very localised heating. However, aluminium cools very rapidly during its laser welding because of its high thermal conductivity and thus the weld zone tends to crack, which leads to a non-airtight sealing of the package. Furthermore, aluminium has a high reflection characteristic. Therefore, it has proved impossible to fuse a thick aluminium layer by using a continuously oscillating yttrium-aluminium garnet (YAG) laser having a relatively low output in the order of several hundred watts, or a $CO_2$ laser to provide a satisfactory weld. This is also true for aluminium-based alloys, such as a corrosion-resistant aluminium-magnesium alloy.

According to this invention a process for welding together elements made of aluminium or an aluminium-based alloy in which the elements are welded together by laser irradiation of a weld zone, is characterised in that an intermediate metal material is located between adjacent surfaces of the elements in the weld zone.

Particular examples of processes and resulting welded assemblies in accordance with this invention will now be described with reference to the accompanying drawings, in which:-

Figure 1 is a section through part of a first example;

Figure 2 is a section through part of a second example;

Figure 3 is a graph showing the relationship between the silicon content of the aluminium-silicon intermediate layer in the second example and the occurrence of cracks in the weld zone;

Figure 4 is a graph showing the relationship between the thickness of the aluminium-silicon intermediate layer in the second example and the occurrence of cracks in the weld zone;

- 3 -

Figure 5 is a section through part of a third example; and,

Figure 6 is a section through part of a fourth example.

The present invention provides a process for the welding of aluminium or aluminium-based elements without the occurrence of cracks in the weld zone.

The present invention also provides a process for the air-tight welding of aluminium or aluminium-based elements by means of a YAG laser.

In one aspect of the present invention, there is provided a process for the laser welding of elements, the bodies of which are made of aluminium or an aluminium-based alloy, characterised in that the elements are welded together by laser irradiation of the weld zone including an intermediate metal material which lies adjacent to the welding surfaces of the bodies of the elements.

Another aspect of the present invention is to provide an assembly of laser welded elements made of aluminum or an aluminium-based alloy, characterized in that the elements are alloyed with an intermediate metal material and are laser welded to each other via an alloy layer comprising the above intermediate metal material.

The assembly may be an airtight laser welded package for semiconductor devices, particularly a microwave amplifier, or laser welded substrates on which semiconductor devices are mounted.

The aluminium or aluminium based alloy elements may be a set of a cover and a casing the body of which includes a recess therein, or a set of substrates to be assembled so as to accomodate semiconductor devices, particularly a microwave amplifier.

The elements may be formed by casting or by mechanical working of essentially pure aluminium or a cast aluminium-based alloy, or a corrosion-resistant aluminium-based alloy or other aluminium-based alloy. A pure aluminium may be, e.g., A 1100 as defined in Japanese Industrial Standard (JIS) H 4000. A cast aluminium-based alloy may be, e.g., AC4A alloy which contains, in percentage by weight, < 0.2 Cu, 8.0 to 10.0 Si, 0.2 to 0.8 Mg, < 0.2 Zn, < 0.7 Fe, 0.3 to 0.8 Mn, < 0.2 Ti. A corrosion-resistant aluminium-based alloy may be, e.g., A 5052 alloy which contains, in percentage by weight, < 0.45 (Si + Fe), < 0.10 Cu, < 0.10 Mn, 2.2 to 2.8 Mg, 0.15 to 0.35 Cr, < 0.10 Zn. Both of these alloys are defined also in JIS H 4000.

The intermediate material, which is a silicon containing aluminium-based alloy sheet, may be a piece separate from each of the bodies of the elements and may be inserted between the welding surfaces of the bodies. The thickness of the insert sheet may be 100 to 1,000 μm. If it is thinner than 100 μm, cracks occur in the weld zone, and if it is thicker than 1,000 μm, it will exceed the diameter of a usual laser beam, thus the laser weld zone will exhibit insufficient strength.

The intermediate metal material may be integrally bonded to the welding surface of the body of at least one of the elements.

Such an intermediate material may be an aluminium -based alloy containing 4.0% to 12.5% by weight of silicon. If the silicon content is lower than 4.0%, the weld zone may suffer from cracking. If the silicon content is higher than 12.5%, the material itself becomes too hard and brittle.

The welding surface of the body of at least one of the elements may be clad with such an aluminium-based alloy intermediate material as mentioned above.

The intermediate material may be a silicon layer deposited on the welding surface of the body of at least one of the elements by vacuum evaporation, sputtering, plasma spraying, and the like.

The intermediate material may be also a zinc or nickel layer deposited by plating, vacuum evaporation, and the like on the welding surface of the body of at least one of the elements.

Furthermore, the intermediate material may be an alternate composite of copper and nickel layers as mentioned above deposited on the welding surface of the body of at least one of the elements.

The results of experiments making use of the process of the present invention are shown in the following examples, with reference to the figures.

Example 1-a

A cover 1 and a casing 2, the side thickness of which was 0.5 mm, were produced of a corrosion-resistant

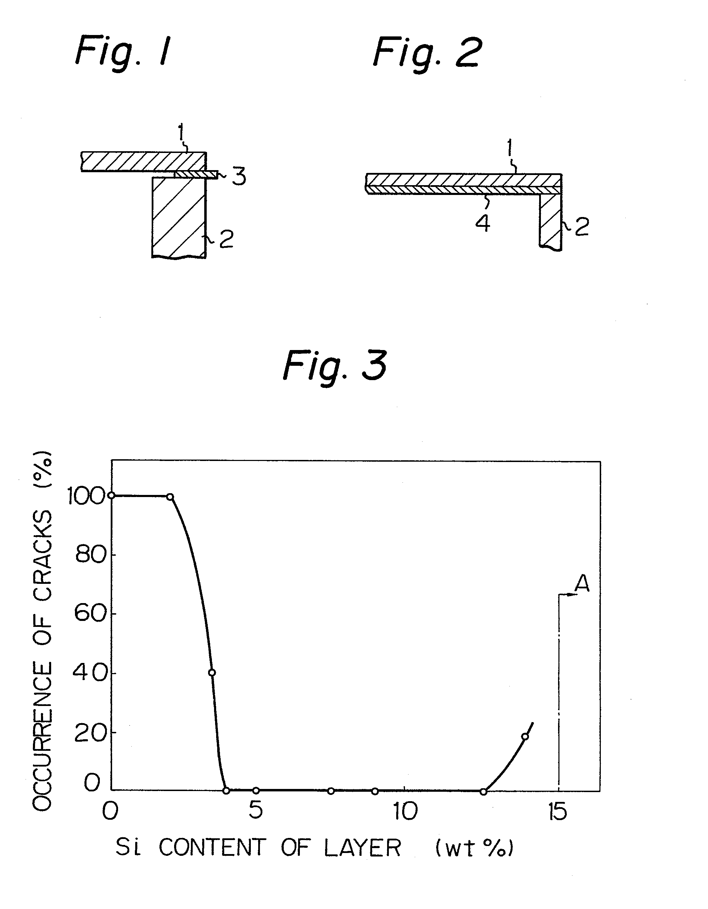

A 5052 aluminium alloy. An intermediate insert 3 was emplaced so as to protrude 0.5 mm from the surface of the cover 1 and the casing 2, as shown in Fig. 1. The insert 3 was an aluminium silicon alloy with the silicon content varied in the range of 0% to 12.5% by weight, and the thickness of the insert was varied in the range of 0 to 1,000 μm.

The heat source was a YAG laser with an average output of 250 to 350 W, having a pulse width of 4 to 6 ms and a pulse rate of 15 to 20 p/s. The weld zone including the insert was irradiated in an atmosphere of nitrogen or argon with a welding speed of 4 to 6 mm/s. The diameter of the laser beam was 0.3 mm.

The welding results are shown in the following tables. Mark o indicates that no cracks were observed in the weld zone. Mark x indicates that cracks occurred. Mark Δ indicates that cracks were not observed, but the strength of the weld zone is lower than that obtained in the case of inserts having a thickness less than 600 μm. This is because the thickness of the insert is too thick in comparison with the diameter of the laser beam.

Where the silicon content of the intermediate insert was in the range of 4.0% to 12.5% by weight, as shown in Table 1, the weld zone was found by means of an X-ray microanalyzer to be an aluminium-silicon solid solution, and its strength was high. These laser welded packages exhibited a very low helium leakage of less than $10^{-10}$ atm·cc/s.

Table 1

| Si content of insert (wt%) | Thickness of Insert (μm) | | | | | | | | | |
|---|---|---|---|---|---|---|---|---|---|---|
| | 0 | 100 | 200 | 300 | 400 | 500 | 600 | 750 | 900 | 1000 |
| 0 | x | - | - | - | - | - | - | - | - | - |
| 2 | - | x | x | x | x | x | x | x | x | - |
| 4.0 | - | x | x | o | o | o | o | Δ | Δ | - |
| 7.5 | - | x | x | o | o | o | o | Δ | Δ | - |
| 9.0 | - | x | o | o | o | o | o | Δ | Δ | - |
| 12.5 | - | o | o | o | o | o | o | Δ | Δ | - |

Example 1-b

Another series of laser welding was carried out in the same way as for Example 1-a, except that the end of the insert did not protrude from the surface of the butted elments, and the side thickness of the casing was 2.5 mm. As shown in Table 2, the desirable range of the thickness of the insert was narrower than in the case of Table 1.

Table 2

| Si content of insert (wt%) | Thickness of Insert (μm) | | | | | | | | | |
|---|---|---|---|---|---|---|---|---|---|---|
| | 0 | 100 | 200 | 300 | 400 | 500 | 600 | 750 | 900 | 1000 |
| 0 | x | - | - | - | - | - | - | - | - | - |
| 2 | - | x | x | x | x | x | x | x | x | - |
| 4.0 | - | x | x | x | x | o | o | x | x | - |
| 7.5 | - | x | x | x | o | o | o | Δ | Δ | - |
| 9.0 | - | x | x | x | o | o | o | Δ | Δ | - |
| 12.5 | - | x | x | x | o | o | o | Δ | Δ | - |

Example 1-C

The diameter of the laser beam was widened to 0.7 mm, and the desirable thickness of the insert was broadened up to 1,000 μm, as shown in Table 3.

Table 3

| Si content of insert | Thickness of insert (μm) | | | |
|---|---|---|---|---|
|  | 500 | 750 | 1000 | 1250 |
| 0 | x | x | x | x |
| 2 | x | x | x | x |
| 4.0 | o | o | o | Δ |
| 7.5 | o | o | o | Δ |
| 9.0 | o | o | o | Δ |
| 12.5 | o | o | o | Δ |

Example 2-a

The same elements were subjected to laser welding as in Example 1-b. However, the welding surface of the cover 1 was clad with a 500 μm thick intermediate aluminium-silicon alloy layer 4, as shown in Fig. 2, instead of the intermediate insert 3, and the content of silicon in the intermediate layer 4 was varied in the range of 0% to 14% by weight. The irradiation was carried out in nitrogen or argon with an average output of 250 to 350 W, the laser beam having a pulse width of 4 to 5 ms, a pulse rate of 15 to 20 p/s, and the diameter of the beam was 0.3 mm. The welding speed was 4 to 6 mm/s. Neither cracks nor voids were observed in the weld zone in the case that the intermediate layer 4 contained 4% to 12.5% by weight of silicon as shown in Fig. 3. However, it was very difficult to produce an aluminium-silicon layer with a silicon content of more than 15% by weight, as designated by A in Fig. 3.

Example 2-b

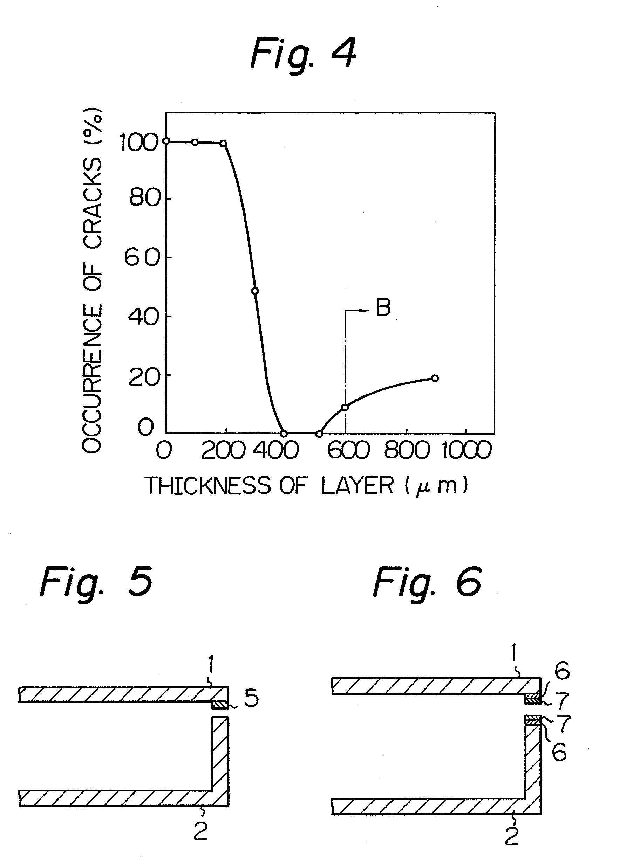

Laser welding was carried out in the same manner as for example 2-a, except that the layer 4 contained constantly 7.5% by weight of silicon and the thickness of the layer 4 was varied in the range of 0 to 900 μm. No cracks were observed in the case that the intermediate layer 4 was 400 to 500 μm thick. The matrix of elements 1 and 2 scarcely fused with the intermediate layer thicker than 600 μm, as designated by B in Fig. 4.

A package of assembled aluminium-based alloy elements, one of which was clad with a 400 to 500 μm thick aluminium-silicon alloy layer containing 4% to 12.5% by weight of silicon, exhibited a high airtight sealing, i.e., the helium leakage was less than $10^{-10}$ atm·cc/s.

Example 3

A cover and a casing, the side thickness of which was 2.5 mm, were produced of A 1100 pure aluminium. A 50 μm thick silicon layer was deposited on the welding surface of the cover 1 by plasma spraying. The cover and casing were butted via this silicon layer 5, as shown in Fig. 5. The laser welding was carried out in nitrogen or argon with a welding speed of 4 mm/s by a 0.3 mm laser beam with an average output of 200 W, a pulse width of 4 ms, and a pulse rate of 15 p/s.

The thus assembled package formed by laser welding a cover and a casing via an aluminium-silicon alloy layer was found to have a high airtight sealing with a helium leakage of less than $10^{-10}$ atm·cc/s. A microscopic observation revealed neither cracks nor voids in the weld zone, and the weld zone was confirmed to be aluminium-silicon eutectic alloy by means of an X-ray microanalyzer.

Example 4

Laser welding was carried out in the same manner as for Example 3, except that a 10 μm thick copper layer 6 and a 10 μm thick nickel layer 7 were successively electrochemically deposited on the welding surface of the cover 1 and casing 2, as shown in Fig. 6. In this case a continuous oscillating YAG laser was used. The laser beam had an average output of 300 W, and its diameter was 0.1 mm. Neither cracks nor voids were observed in the weld zone under the microscope, and the helium leakage was less than $10^{-10}$ atm·cc/s.

Example 5-a

A 3 mm thick corrosion-resistant aluminium-based alloy A 5050 plate and a 3 mm thick pure aluminium A 1100 plate were butted via a 500 μm thick intermediate insert of an aluminium-based alloy containing 7.5% by weight of silicon. Laser welding was carried out in the same manner as for Example 2-a. The width of the weld zone was about 1.8 mm, and the depth of penetration was about 1.2 mm. Neither cracks nor voids were observed in the weld zone, and the assembled plates were fractured in the matrix of A 1100 plate, but not in the weld zone, which demonstrated a high strength.

Example 5-b

Two 3 mm thick corrosion-resistant aluminium-based alloy A 5052 plates were plated with a 10 μm thick nickel layer on the butting surface and were butted with the plated layers in contact with each other. Laser welding was carried out in the same way as for Example 5-a. The width of the weld zone was 1.5 mm, and the depth of penetration was 1.5 mm. The features and strength of the weld zone were similar to those of Example 5-a.

Example 5-c

The plates were prepared in the same way as those of Example 5-b, except that they were plated with a 10 μm thick zinc layer on the butting surface. The welding conditions, features, and strength of the weld zone were similar to those of Example 5-b.

According to the present invention, there are provided aluminium or aluminium - based alloy packages or substrates for semiconductor devices, particularly a microwave amplifier, with stable and highly airtight sealing by laser welding. High output semiconductor devices can be mounted in the packages and on the substrates due to the excellent thermal conductivity of aluminium or aluminium-based alloy materials.

C L A I M S

1.    A process for welding together elements (1, 2) made of aluminium or an aluminium-based alloy in which the elements are welded together by laser irradiation of a weld zone, characterised in that an intermediate metal material (3, 4, 5, 6, 7) is located between adjacent surfaces of the elements in the weld zone.

2.    A process according to claim 1, in which the intermediate metal material is integrally bonded to the surface of at least one of the elements (1, 2) by the at least one (1) of the elements being clad with the intermediate metal material (4) or by the intermediate metal material (5) being deposited on the surface of the at least one (1) of the elements.

3.    A process according to claim 1 or claim 2, in which the intermediate metal material (3, 4, 5) consists of an aluminium-based alloy material which contains from 4.0% to 12.5% by weight of silicon.

4.    A process according to claim 3, in which the intermediate metal material (3, 4, 5) has a thickness in a range from 100 to 1,000 µm.

5.    A process according to claim 1 or claim 2, in which the intermediate metal material (3, 4, 5) consists essentially of silicon, zinc or nickel.

6.    A process according to claim 5, in which the thickness of the intermediate metal layer (3, 4, 5) is selected such that after welding has been completed the silicon, zinc or nickel is present in the weld zone in a range from 4.0% to 12.5% by weight.

7.    A process according to claim 1 or claim 2, in which the intermediate metal material (6, 7) consists of a composite of alternately deposited copper (6) and nickel (7) layers.

8.    A process according to any one of the preceding claims, in which the weld zone of the elements (1, 2) including the intermediate metal material (3, 4, 5, 6, 7) is irradiated by a YAG laser.

9.    An assembly of welded-together elements (1, 2) produced by a process in accordance with any one of the preceding claims, in which the elements are a cover (1) and a casing (2), the assembly forming a package for electronic devices, with the casing body (2) including a recess and the cover (1) and casing (2) being welded together to provide an inner airtight space.

10.    An assembly according to claim 9, in which the package contains semiconductor devices forming a microwave amplifier or in which the package forms a substrate on which semiconductor devices are mounted.

## Fig. 1

## Fig. 2

## Fig. 3

*Fig. 4*

*Fig. 5*

*Fig. 6*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | WELDING JOURNAL, vol. 59, no. 10, October 1980, Miami C.E. WITHERELL et al. "Laser brazing", pages 267-s - 277-s  * Page 273-s, left-hand column, last two lines and middle column, paragraph 1 * | 1,3 | B 23 K  26/00<br>B 23 K  1/04 |
| Y | LASER FOCUS, vol. 17, no. 11, November 1981, Newton C.E. WITHERELL "Laser micro-brazing to join small parts", pages 73-80  * Page 73, table 1; page 78, lines 6-13 * | 1,3 | |
| A | LASER FOCUS, vol. 17, no. 11, November 1981, Newton | 8-10 | |
| | | | **TECHNICAL FIELDS SEARCHED (Int. Cl. ³)** |
| Y | US-A-2 602 413  (M.A. MILLER)  * Column 5, lines 51-65 * | 1-3 | B 23 K  1/00<br>B 23 K  26/00<br>B 23 K  35/00 |
| Y | US-A-3 168 381  (W.D. FINNEGAN et al.)  * Claim 1 * | 1-3 | |
| A | | 4 | |
| Y | DE-C-1 527 307  (GENERAL ELECTRIC CO.)  * Claim; examples 3, 4, 9 * | 1-3,5, 6 | |

--- -/-

The present search report has been drawn up for all claims

| Place of search | Date of completion of the search | Examiner |
|---|---|---|
| BERLIN | 17-04-1984 | WUNDERLICH J E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| A | DE-C- 217 637 (A. NIELSEN)<br>* Claims *<br><br>--- | 7 | |
| A | Patent Abstracts of Japan vol. 6, no. 36, 5 March 1982 & JP-A-56-151188<br><br>--- | 1 | |
| A | E. LÜDER "Handbuch der Löttechnik" 1952, VERLAG TECHNIK, Berlin pages 381-388<br>* Page 382, table 139, nos. 1, 7-9; page 384 - page 386, line 33 *<br><br>--- | 3,5 | |
| A | US-A-4 000 392 (C.M. BANAS et al.)<br>* Abstract; figure 1 *<br><br>----- | 1 | |
| | | | TECHNICAL FIELDS SEARCHED (Int. Cl. 3) |

The present search report has been drawn up for all claims

| Place of search<br>BERLIN | Date of completion of the search<br>17-04-1984 | Examiner<br>WUNDERLICH J E |
|---|---|---|